(19) Europäisches Patentamt / European Patent Office / Office européen des brevets

(11) **EP 2 731 222 B1**

(12) **EUROPEAN PATENT SPECIFICATION**

(45) Date of publication and mention
of the grant of the patent:
**20.07.2016 Bulletin 2016/29**

(21) Application number: **13726662.3**

(22) Date of filing: **25.01.2013**

(51) Int Cl.:
*H02J 3/18* (2006.01)      *H02M 7/48* (2007.01)

(86) International application number:
**PCT/CN2013/070975**

(87) International publication number:
**WO 2014/015666 (30.01.2014 Gazette 2014/05)**

(54) **POWER GRID REACTIVE COMPENSATION METHOD AND APPARATUS, AND GRID-TIED INVERTER**

VERFAHREN UND VORRICHTUNG ZUR BLINDLEISTUNGSKOMPENSATION IN EINEM STROMNETZ UND WECHSELRICHTER

PROCÉDÉ ET APPAREIL DE COMPENSATION DE PUISSANCE RÉACTIVE DU RÉSEAU ÉLECTRIQUE, ET ONDULEUR LIÉ À CE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2012 CN 201210259515**

(43) Date of publication of application:
**14.05.2014 Bulletin 2014/20**

(73) Proprietor: **Huawei Technologies Co., Ltd.
Longgang District
Shenzhen, Guangdong 518129 (CN)**

(72) Inventors:
• **ZHANG, Yanzhong
Shenzhen
Guangdong 518129 (CN)**
• **GAO, Yongbing
Shenzhen
Guangdong 518129 (CN)**
• **GUO, Xin
Shenzhen
Guangdong 518129 (CN)**

(74) Representative: **Maiwald Patentanwalts GmbH
Engineering
Elisenhof
Elisenstrasse 3
80335 München (DE)**

(56) References cited:
**EP-A1- 2 595 305        WO-A1-2013/004585
CN-A- 1 083 985        CN-A- 102 215 012
CN-A- 102 790 399        DE-A1- 10 221 592
JP-A- 2002 238 266**

• **BLAABJERG F ET AL: "Power electronics - key technology for renewable energy systems", POWER ELECTRONICS, DRIVE SYSTEMS AND TECHNOLOGIES CONFERENCE (PEDSTC), 2011 2ND, IEEE, 16 February 2011 (2011-02-16), pages 445-466, XP031936654, DOI: 10.1109/PEDSTC.2011.5742462 ISBN: 978-1-61284-422-0**

## Description

### TECHNICAL FIELD

The present invention relates to the field of electric technologies, and in particular, to a method for reactive power compensation of power grid, an apparatus for reactive power compensation of power grid and a grid-tied inverter.

### BACKGROUND

Solar energy is increasingly gaining popularity as a new energy source which is environment-friendly and renewable. An attention is especially paid to conversion of the solar energy into electric energy. In order to convert direct current generated by a solar cell panel into alternating current so as to be input into a power grid, it is required to use a solar grid-tied inverter.

When a power grid fault of voltage dip occurs, it is required that the solar inverter can output reactive power so as to implement reactive power compensation, and then support recovery of the power grid. The so-called voltage dip specifically refers to decrease of the magnitude of the voltage of the power grid; the so-called reactive power refers to the electric power required for establishing an alternating magnetic field and a magnetic induction flux but not converted into mechanical energy or thermal energy; the so-called reactive power compensation plays roles of increasing the power factor of the power grid, reducing the loss of a power supply transformer and the loss of a transmission line, increasing the power supply efficiency, and improving the power supply environment in a power supply system.

In the existing technology, when a solar grid-tied inverter is used to implement reactive power compensation, a bipolar modulation mode or a unipolar modulation mode in PWM (Pulse Width Modulation, pulse width modulation) is generally used. When the bipolar modulation mode is used for implementing reactive power compensation, no special requirement is imposed on the voltage value of a current power grid, but the switching loss and the inductance loss are larger relative to those of the unipolar modulation mode; when the unipolar modulation mode is used for implementing reactive power compensation, the switching loss and the inductance loss may be smaller, but it is difficult to implement soft switching when the voltage of the power grid is low (such as the voltage of the power grid is close to the zero-crossing voltage), so that the reactive power compensation cannot be implemented.

WO 2013/004585 A1 describes a method for operating an inverter with one bridge assembly that can be actuated in a modulated manner for supplying electrical power to an energy supply network.

EP 2 595 305 A1 describes inverters employing a first and a second bridge circuit for converting DC input current into an AC output current.

Blaabjerg F. et al: "Power Electronics - Key Technology for Renewable Energy Systems" describes use of power electronics in power generation, power transmission/distribution and end-user application.

### SUMMARY

In order to solve the technical problem above, embodiments of the present invention provide a method for reactive power compensation of power grid, an apparatus for reactive power compensation of power grid and a grid-tied inverter, so as to effectively implement reactive power compensation at the time of voltage dip of a power grid, and reduce the switching loss and the inductance loss at the same time, and the technical solution is as follows.

In a first aspect, an embodiment of the present invention provides a method for reactive power compensation of power grid, including:

detecting voltage of a power grid;
when a voltage magnitude of the detected voltage is lower than a preset normal voltage magnitude, determining an electric reference parameter corresponding to the voltage;
determining a current pulse width modulation (PWM mode) according to the electric reference parameter corresponding to the voltage, where the PWM mode includes: a unipolar modulation mode and a bipolar modulation mode; and
outputting reactive power by using the current PWM mode, so as to implement reactive power compensation for the power grid;
wherein the electric
reference parameter corresponding to the voltage includes: a voltage phase angle $\theta$ corresponding to the voltage; the determining a current pulse width modulation (PWM) mode according to the electric reference parameter specifically includes:

determining the unipolar modulation mode as the current PWM mode when the voltage phase angle $\theta$ corresponding to the voltage satisfies $\theta_1 \leq \theta \leq \theta_2$ or $\theta_3 \leq \theta \leq \theta_4$ in one current period; otherwise, determining the bipolar modulation mode as the current PWM mode, where

$$\theta_1 = \arcsin\left(\frac{U_{\min}}{U_{peak}}\right), U_{\min} \text{ is the minimum}$$

voltage magnitude required for

implementing soft switching by using the unipolar modulation mode, $U_{peak}$ is the voltage peak value in the current period, and $\theta_2 = \pi - \theta_1$, $\theta_3 = \pi + \theta_1$, $\theta_4 = 2\pi - \theta_1$.

In a second aspect, an embodiment of the present invention further provides an apparatus for reactive power compensation of power grid, including:

a voltage detecting module, configured to detect voltage of a power grid, and send the detected voltage to a magnitude determining module;
the magnitude determining module, configured to determine whether a voltage magnitude of the detected voltage is lower than a preset normal voltage magnitude, and if yes, trigger an electric reference parameter determining module;
the electric reference parameter determining module, configured to determine an electric reference parameter corresponding to the voltage, and send the electric reference parameter corresponding to the voltage to a PWM mode determining module;
the PWM mode determining module, configured to determine a current pulse width modulation (PWM) mode according to the electric reference parameter corresponding to the voltage, and send the current PWM mode to a reactive power compensation module, where the PWM mode includes: a unipolar modulation mode and a bipolar modulation mode; and
the reactive power compensation module, configured to output reactive power by using the current PWM mode, so as to implement reactive power compensation for the power grid;
wherein
the electric reference parameter determining module is specifically configured to determine a voltage phase angle $\theta$ corresponding to the voltage, and send the voltage phase angle $\theta$ corresponding to the voltage to the PWM mode determining module; and the PWM mode determining module is specifically configured to use the unipolar modulation mode as the current PWM mode when the voltage phase angle $\theta$ corresponding to the voltage satisfies $\theta_1 \leq \theta \leq \theta_2$ or $\theta_3 \leq \theta \leq \theta_4$ in one current period; and use the bipolar modulation mode as the current PWM mode when the voltage phase angle $\theta$ corresponding to the voltage satisfies neither $\theta_1 \leq \theta \leq \theta_2$ nor $\theta_3 \leq \theta \leq \theta_4$ in one current period, where

$$\theta_1 = \arcsin\left(\frac{U_{\min}}{U_{peak}}\right),$$ $U_{\min}$ is the minimum voltage magnitude required for implementing soft switching by using the unipolar modulation mode, $U_{peak}$ is the voltage peak value in the current period, and $\theta_2 = \pi - \theta$, $\theta_3 = \pi_7 + \theta_1$, $\theta_4 = 2\pi - \theta1$.

In a third aspect, an embodiment of the present invention further provides a grid-tied inverter, including: a power management apparatus and an inverting apparatus, and further including: any one apparatus for reactive power compensation of power grid provided by the embodiment of the present invention, where the inverting apparatus performs active output under the control of the power management apparatus; the apparatus for reactive power compensation of power grid performs power grid reactive power compensation under the control of the power management apparatus.

In the technical solution provided by the embodiments of the present invention, when the voltage magnitude of the detected voltage is lower than the preset normal voltage magnitude, the electric reference parameter corresponding to the voltage is determined, then the current PWM mode: the unipolar modulation mode or the bipolar modulation mode is determined according to the electric reference parameter corresponding to the voltage, and the reactive power is output by using the determined PWM mode, so as to implement reactive power compensation for the power grid. Compared with the existing technology, the current PWM mode is determined through the electric reference parameter corresponding to the detected voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

**BRIEF DESCRIPTION OF DRAWINGS**

To illustrate the technical solution in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a first flow chart of a method for reactive power compensation of power grid according to the state of the art;
FIG. 2 is a second flow chart of a method for reactive power compensation of power grid according to the state of the art;
FIG. 3 is a flow chart of a method for reactive power compensation of power grid provided by an embodiment of the present invention;
FIG. 4 is a schematic diagram of area selection in unipolar and bipolar modulation provided by an embodiment of the present invention;
FIG. 5 is a diagram of a grid-connected inverting topology provided by an embodiment of the present invention; and
FIG. 6 is a schematic structural diagram of an apparatus for reactive power compensation of power grid provided by an embodiment of the present invention.

## DESCRIPTION OF EMBODIMENTS

The technical solution in the embodiments of the present invention will be clearly and completely described in the following with reference to the accompanying drawings in the embodiments of the present invention. It is obvious that the described embodiments are merely a part rather than all of the embodiments of the present invention. All other embodiments obtained by a person of ordinary skill in the art based on the embodiment of the present invention without creative efforts shall fall within the protection scope of the present invention.

In order to effectively implement reactive power compensation at the time of voltage dip of a power grid, and meanwhile reduce the switching loss and the inductance loss, the present invention provides a method for reactive power compensation of power grid, an apparatus for reactive power compensation of power grid and a grid-tied inverter.

The following describes a method for reactive power compensation of power grid provided by an embodiment of the present invention.

It should be noted that, a method for reactive power compensation of power grid provided by the present invention is applicable to a power grid system having a grid-tied inverter. The grid-tied inverter is configured to convert direct current generated by a power generation device method into alternating current and feed the alternating current into the power grid. For example, the grid-tied inverter may be a solar grid-tied inverter, a wind energy grid-tied inverter and the like.

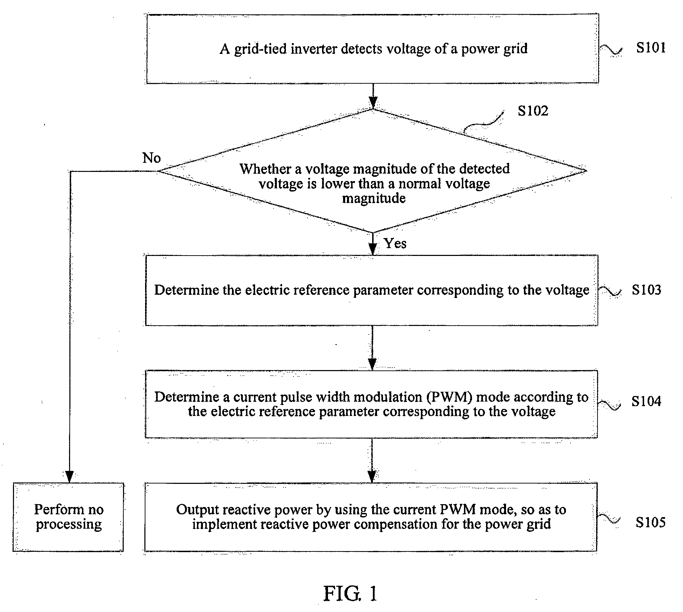

As shown in FIG. 1, a method for reactive power compensation of power grid may include the following steps.

S101: The grid-tied inverter detects voltage of a power grid.

S102: Determine whether a voltage magnitude of the detected voltage is lower than a preset normal voltage magnitude, and if yes, execute step S103; otherwise, perform no processing.

In a power grid electricity transmission procedure, the voltage of the current power grid is detected in real time or at regular time, whether the voltage magnitude of the detected voltage is lower than the preset normal voltage magnitude is determined, and different operations are executed according to different determining results. When it is determined that the voltage magnitude of the voltage is lower than the preset normal voltage magnitude, it indicates that a voltage dip fault occurs in the power grid, and reactive power compensation processing needs to be performed; while when it is determined that the voltage magnitude of the voltage is not lower than the preset normal voltage magnitude, it indicates that the voltage of the power grid is in a normal range, and no processing is required.

It can be understood that, the normal voltage magnitude is a boundary value between the normal state and the dip fault of the voltage of the power grid, and may be the highest magnitude corresponding to the voltage dip fault or be higher than the highest magnitude corresponding to the voltage dip fault, either of which is reasonable. Definitely, in an actual application, normal voltage magnitudes corresponding to different power grids may be different, and meanwhile, quality requirements of a power grid in different periods may be different, so the same power grid may be corresponding to different normal voltage magnitudes in different periods.

S103: Determine the electric reference parameter corresponding to the voltage.

When it is determined that the voltage magnitude of the voltage is lower than the preset normal voltage magnitude, that is, reactive power compensation is required because a voltage dip fault occurs in the current power grid, the electric reference parameter corresponding to the voltage may be determined, and subsequent reactive power compensation processing is performed by using the electric reference parameter corresponding to the voltage. The electric reference parameter corresponding to the voltage is the basis used to distinguish which mode of the unipolar modulation mode and the bipolar modulation mode is used, and may be: the voltage magnitude corresponding to the voltage or the voltage phase angle corresponding to the voltage. It can be understood that, in an actual application, an electric reference parameter related to the voltage may be selected according to an actual situation.

S104: Determine a current pulse width modulation (PWM) mode according to the electric reference parameter corresponding to the voltage.

The PWM mode may include: the unipolar modulation mode and the bipolar modulation mode.

After the electric reference parameter corresponding to the voltage is determined, a current PWM mode may be determined, so as to perform subsequent reactive power compensation. Voltage conditions corresponding to the unipolar modulation mode and the bipolar modulation mode are different, so the electric reference parameter corresponding to the voltage may be used as the modulation basis, so as to select a modulation mode suitable for the current environment, and then effectively implement reactive power compensation.

When the bipolar modulation mode is used for implementing reactive power compensation, no requirement is imposed on the voltage value of a current power grid, but the switching loss and the inductance loss are larger relative to those of the unipolar modulation mode; when the unipolar modulation mode is used for implementing reactive power compensation, the switching loss and the inductance loss may be smaller, but it is difficult to implement soft switching when the voltage of the power grid is low (such as the voltage of the power grid is close to the zero-crossing voltage), so that the reactive power compensation cannot be implemented. The difference between the unipolar modulation mode and the bipolar modulation mode mainly lies in whether two levels (not including the zero level) are output in the PWM modulation procedure: the unipolar modulation mode is to compare a modulation wave with a carrier, and when the modulation wave is greater than the carrier, a high level is output; otherwise, no zero level is output; the bipolar modulation mode is to compare a modulation wave with a carrier, and when the modulation wave is greater than the carrier, a high level is output; otherwise, a low level is output.

S105: Output reactive power by using the current PWM mode, so as to implement reactive power compensation for the power grid.

After the current PWM mode: the unipolar modulation mode or the bipolar modulation mode is determined, reactive power may be output by using the PWM mode, so as to implement reactive power compensation for the power grid.

The basic procedure that the bipolar modulation mode and the unipolar modulation mode output the reactive power is:

determining a reactive component of the grid-connected current according to the reactive power required for the current power grid;

determining an active component of the grid-connected current according to active power output by the grid-tied inverter;

determining a transient value of the grid-connected current according to the active component and the reactive component of the grid-connected current, and the voltage phase angle; and

controlling turn-on and turn-off of a switching tube according to the unipolar modulation method and the bipolar modulation method.

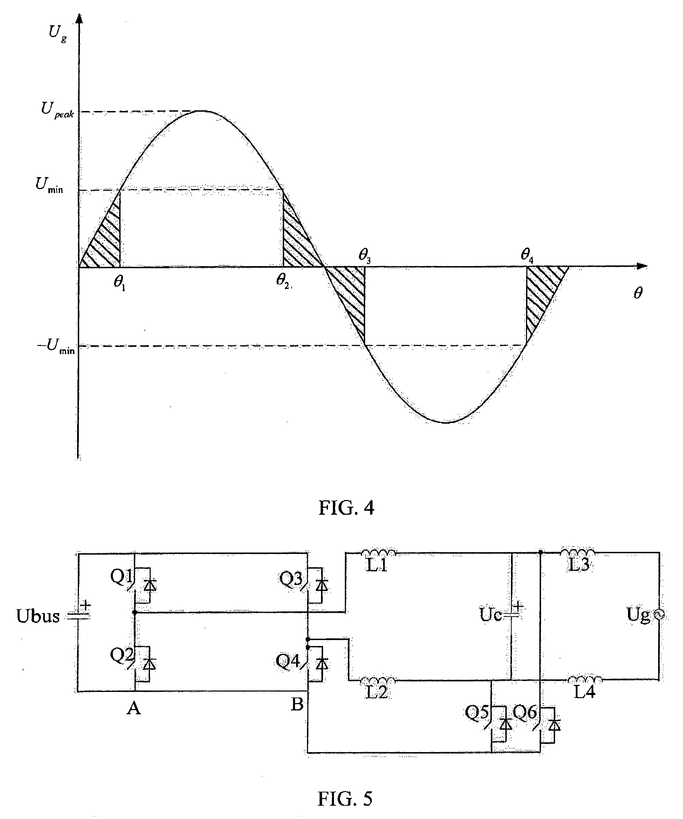

Further, in a schematic diagram of a grid-connected inverting topology shown in FIG. 5, Q1 and Q2 form a high-frequency bridge arm A, Q3 and Q4 form a high-frequency bridge arm B, and Q5 and Q6 form a power frequency bridge arm. The unipolar modulation procedure is:

when the voltage of the power grid Ug>0, Q5 is conducted, and Q6 is turned off;

when the voltage of the power grid Ug<0, Q5 is turned off, and Q6 is conducted;

when the grid-connected current ig>0, the high-frequency bridge arm A works, and the high-frequency bridge arm B is turned off; and

when the grid-connected current ig<0, the high-frequency bridge arm A is turned off, and the high-frequency bridge arm B works.

The bipolar modulation procedure is:

the power frequency bridge arm is turned off; and the high-frequency bridge arms A and B work together.

In the technical solution provided by the embodiments of the present invention, when the voltage magnitude of the detected voltage is lower than the preset normal voltage magnitude, the electric reference parameter corresponding to the voltage is determined, then the current PWM mode: the unipolar modulation mode or the bipolar modulation mode is determined according to the electric reference parameter corresponding to the voltage, and the reactive power is output by using the determined PWM mode, so as to implement reactive power compensation for the power grid. Compared with the existing technology, the current PWM mode is determined through the electric reference parameter corresponding to the voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

Persons skilled in the art can understand that, the current period is just the power grid period, where power grids with different frequencies are corresponding to different power grid periods.

For example, the power grid period of a power grid with 50 Hz is 20 ms, namely, the current period is also 20 ms; the power grid period of a power grid with 60 Hz is 16.67 ms, namely, the current period is also 16.67 ms.

A method for reactive power compensation of power grid provided by the present invention is introduced in combination with a specific application example below.

It should be noted that, a method for reactive power compensation of power grid provided by the present invention is applicable to a power grid system having a grid-tied inverter. The grid-tied inverter is configured to convert direct current generated by a power generation device method into alternating current and feed the alternating current into the power grid. For example, the grid-tied inverter may be a solar grid-tied inverter, a wind energy grid-tied inverter and the like.

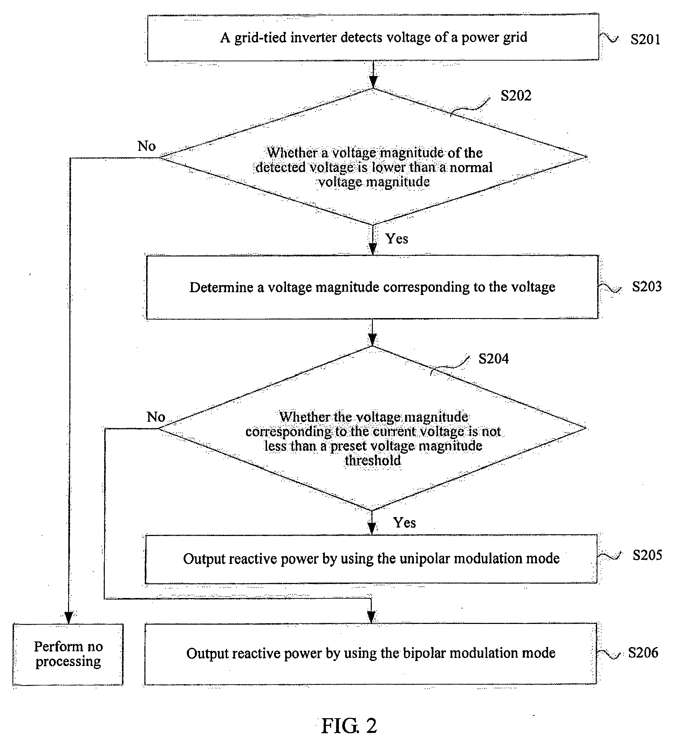

As shown in FIG. 2, a method for reactive power compensation of power grid may include the following steps:

S201: A grid-tied inverter detects voltage of a power grid.

S202: Determine whether a voltage magnitude of the detected voltage is lower than a preset normal voltage magnitude, and if yes, execute step S203; otherwise, perform no processing.

In this embodiment, step S201 to step S202 are similar to step S101 to step S102 of the foregoing embodiment, so no more unnecessary details are given here.

S203: Determine a voltage magnitude corresponding to the voltage.

When it is determined that the magnitude of the voltage of the power grid is lower than the preset normal voltage magnitude, that is, reactive power compensation is required because a voltage dip fault occurs in the current power grid, the voltage magnitude corresponding to the voltage may be determined, and subsequent reactive power compensation processing is performed by using the voltage magnitude corresponding to the voltage. The voltage magnitude corresponding to the voltage may be used as the basis for distinguishing which mode of the unipolar modulation mode and the bipolar modulation mode is used.

S204: Determine whether the voltage magnitude corresponding to the voltage is not less than a preset voltage magnitude threshold, and if yes, execute step S205; otherwise, execute step S206.

S205: Output reactive power by using the unipolar modulation mode.

S206: Output reactive power by using the bipolar modulation mode.

After the voltage magnitude corresponding to the voltage is determined, whether the voltage magnitude corresponding to the voltage is less than the preset voltage magnitude threshold may be determined, and different PWM modes are selected to implement reactive power compensation according to different determining results. When the voltage magnitude corresponding to the voltage is not less than the preset voltage magnitude threshold, the reactive power may be output by using the unipolar modulation mode, so as to have small switching loss and small inductance loss at the time of implementing reactive power compensation; while when the voltage magnitude of the voltage is less than the preset voltage magnitude threshold, the reactive power may be output by using the bipolar modulation mode, so as to implement reactive power compensation under a situation that the voltage of the power grid is low. It can be understood that, the voltage magnitude threshold is set according to the minimum voltage magnitude required for implementing soft switching by using the unipolar modulation mode. In an actual application, for different power grid demands, the voltage magnitude threshold may be set slightly higher than the minimum voltage magnitude required for implementing soft switching by using the unipolar modulation mode, or may be set as the minimum voltage magnitude required for implementing soft switching by using the unipolar modulation mode, either of which is reasonable.

In this embodiment, when the voltage magnitude of the detected voltage is lower than the preset normal voltage magnitude, the voltage magnitude corresponding to the voltage is determined, and when the voltage magnitude corresponding to the voltage is not less than the preset voltage magnitude threshold, the unipolar modulation mode is used for implementing reactive power compensation; otherwise, the bipolar modulation mode is used for implementing reactive power compensation

sation. Compared with the existing technology, the current PWM mode is determined through the voltage magnitude corresponding to the voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

A method for reactive power compensation of power grid provided by the present invention is introduced in combination with another specific application example below.

It should be noted that, a method for reactive power compensation of power grid provided by the present invention is applicable to a power grid system having a grid-tied inverter. The grid-tied inverter is configured to convert direct current generated by a power generation device method into alternating current and feed the alternating current into the power grid. For example, the grid-tied inverter may be a solar grid-tied inverter, a wind energy grid-tied inverter and the like.

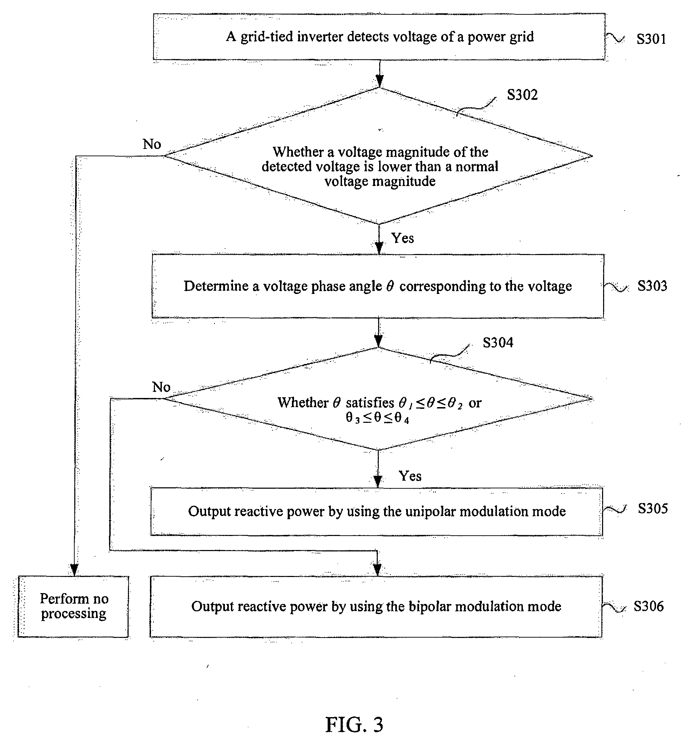

As shown in FIG. 3, a method for reactive power compensation of power grid may include the following steps:

S301: A grid-tied inverter detects voltage of a power grid.
S302: Determine whether a voltage magnitude of the detected voltage is lower than a preset normal voltage magnitude, and if yes, execute step S303; otherwise, perform no processing.

In this embodiment, step S301 to step S302 are similar to step S101 to step S102 of the foregoing embodiment, so no more unnecessary details are given here.

S303: Determine a voltage phase angle $\theta$ corresponding to the voltage.

When it is determined that the voltage magnitude of the voltage is lower than the preset normal voltage magnitude, that is, reactive power compensation is required because a voltage dip fault occurs in the current power grid, the voltage phase angle $\theta$ corresponding to the voltage may be determined, and subsequent reactive power compensation processing is performed by using the determined voltage phase angle $\theta$. The voltage phase angle $\theta$ may be used as the basis for distinguishing which mode of the unipolar modulation mode and the bipolar modulation mode is used.

Persons skilled in the art can understand that, the voltage phase angle $\theta$ corresponding to the voltage is obtained by a phase locking module in the grid-tied inverter, where phase locking is an indispensable function of the grid-tied inverter. The mode of determining the voltage phase angle through the phase locking module in the grid-tied inverter is the same as that in the existing technology, so no more unnecessary details are given here.

S304: Determine whether the voltage phase angle $\theta$ corresponding to the voltage satisfies $\theta_1 \le \theta \le \theta_2$ or $\theta_3 \le \theta \le \theta_4$ in one current period, and if yes, execute step S305; otherwise, execute step S306.

S305: Output reactive power by using the unipolar modulation mode.

S306: Output reactive power by using the bipolar modulation mode.

After the voltage phase angle $\theta$ corresponding to the voltage is determined, whether the voltage phase angle $\theta$ corresponding to the voltage satisfies: $\theta_1 \le \theta \le \theta_2$ or $\theta_3 \le \theta < \theta_4$ in one current period may be determined, and different PWM modes are selected to implement reactive power compensation according to different determining results. When the voltage phase angle $\theta$ corresponding to the voltage satisfies $\theta_1 \le \theta \le \theta_2$ or $\theta_3 \le \theta \le \theta_4$, the reactive power may be output by using the unipolar modulation mode, so as to have small switching loss and small inductance loss at the time of implementing reactive power compensation; otherwise, the bipolar modulation mode may be used for outputting reactive power, so as to implement reactive power compensation under a situation that the voltage of the power grid is low.

$$\theta_1 = \arcsin(\frac{U_{\min}}{U_{peak}})$$, $U_{\min}$ is a voltage magnitude required for implementing soft switching by using the unipolar modulation mode, $U_{peak}$ is the voltage peak value in the current period, and $\theta_2 = \pi - \theta_1$, $\theta_3 = \pi + \theta_1$, $\theta_4 = 2\pi + \theta_1$.

It can be understood that, $U_{min}$ may be set according to the minimum voltage magnitude required for implementing soft switching by using the unipolar modulation mode. In an actual application, for different power grid demands, $U_{min}$ may be set slightly higher than the minimum voltage magnitude required for implementing soft switching by using the unipolar modulation mode, or may be set as the minimum voltage magnitude required for implementing soft switching by using the unipolar modulation mode, either of which is reasonable.

A schematic diagram of area selection in unipolar and bipolar modulation modes is shown in FIG. 4. The waveform diagram shown in the drawing is a waveform under a situation that the voltage of the power grid is normal, Ug is the voltage of the power grid, $\theta$ is the voltage phase angle, $U_{peak}$ is the voltage peak value in one current period, and $U_{min}$ is the minimum voltage magnitude required for implementing soft switching by using the unipolar modulation mode.

According to $U_{min}$, $$\theta_1 = \arcsin(\frac{U_{\min}}{U_{peak}})$$ is obtained, and $\theta_2 = \pi - \theta_1$, $\theta_3 = \pi + \theta_1$, $\theta_4 = 2\pi - \theta_1$,

When the voltage phase angle $\theta$ corresponding to the detected voltage satisfies: $\theta_1 \le \theta \le \theta_2$ or $\theta_3 \le \theta \le \theta_4$, $\theta_4$, the unipolar modulation mode is used; otherwise the bipolar modulation mode is used.

In this embodiment, when the voltage magnitude of the detected voltage is lower than the preset normal voltage magnitude, the voltage phase angle $\theta$ corresponding to the voltage is determined, and when the voltage phase angle $\theta$ corresponding to the voltage satisfies $\theta_1 \le \theta \le \theta_2$, or $\theta_3 \le \theta \le \theta_4$, the unipolar modulation mode is used for implementing reactive power compensation; otherwise, the bipolar modulation mode is used for implementing reactive power compensation. Compared with the existing technology, the current PWM mode is determined through the voltage phase angle $\theta$ corresponding to the voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

Through the description of the foregoing method embodiments, a person skilled in the art may clearly understand that the present invention may be implemented by means of software and a necessary general hardware platform, or of course, by means of a hardware, but the former is preferred in many cases. Based on such an understanding, the technical solution of the present invention essentially, or the part contributing to the prior art may be implemented in the form of a software product. The computer software product is stored in a storage medium, and includes several instructions for instructing a computer device (which may be a personal computer, a server, or a network device) to perform all or part of the steps of the methods provided in the embodiments of the present invention. The storage medium includes: any medium that can store program codes, such as a read-only Memory (ROM), a random access memory (RAM), a magnetic disk, or an optical disk.

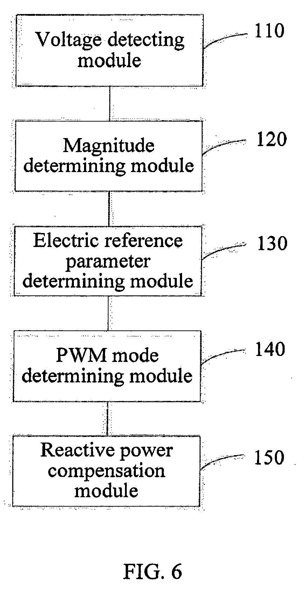

Corresponding to the above method embodiments, an embodiment of the present invention further provides an apparatus for reactive power compensation of power grid, which, as shown in FIG. 6, may include:

a voltage detecting module 110, configured to detect voltage of a power grid, and send the detected voltage to a magnitude determining module 120;
the magnitude determining module 120, configured to determine whether a voltage magnitude of the detected voltage is lower than a preset normal voltage magnitude, and if yes, trigger an electric reference parameter determining module 130;
the electric reference parameter determining module 130, configured to determine an electric reference parameter corresponding to the voltage, and send the electric reference parameter corresponding to the voltage to a PWM mode determining module 140;
the PWM mode determining module 140, configured to determine a current pulse width modulation (PWM) mode according to the electric reference parameter corresponding to the voltage, and send the current PWM mode to a reactive power compensation module 150, where the PWM mode includes: a unipolar modulation mode and a bipolar modulation mode; and

the reactive power compensation module 150, configured to output reactive power by using the current PWM mode, so as to implement reactive power compensation for the power grid.

In the apparatus for reactive power compensation of power grid provided by the embodiment of the present invention, when the voltage magnitude of the detected voltage is lower than the preset normal voltage magnitude, the electric reference parameter corresponding to the voltage is determined, then the current PWM mode: the unipolar modulation mode or the bipolar modulation mode is determined according to the electric reference parameter corresponding to the voltage, and the reactive power is output by using the determined PWM mode, so as to implement reactive power compensation for the power grid. Compared with the existing technology, the current PWM mode is determined through the electric reference parameter corresponding to the voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

The electric reference parameter determining module 130 is specifically configured to determine a voltage magnitude corresponding to the voltage, and send the voltage magnitude corresponding to the voltage to a PWM mode determining module 140.

The PWM mode determining module 140 is specifically configured to determine the unipolar modulation mode as the current PWM mode when the voltage magnitude corresponding to the voltage is not less than a preset voltage magnitude threshold; and determine the bipolar modulation mode as the current PWM mode when the voltage magnitude corresponding to the voltage is greater than the preset voltage magnitude threshold.

In another embodiment of the present invention, the electric reference parameter determining module 130 is specifically configured to determine a voltage phase angle $\theta$ corresponding to the voltage, and send the voltage phase angle $\theta$ corresponding to the voltage to the PWM mode determining module 140.

The PWM mode determining module 140 is specifically configured to determine the unipolar modulation mode as the current PWM mode when the voltage phase angle $\theta$ corresponding to the voltage satisfies $\theta_1 \le \theta \le \theta_2$, or $\theta_3 \le \theta \le \theta_4$, in one current period; and determine the bipolar modulation mode as the current PWM mode when the voltage phase angle $\theta$ corresponding to the voltage satisfies neither $\theta_1 \le \theta \le \theta_2$, nor $\theta_3 \le \theta \le \theta_4$ in one current period, where $= \theta_1 = \arcsin(\dfrac{U_{min}}{U_{peak}})$ , $U_{min}$ is the minimum voltage magnitude required for implementing soft switching by using the unipolar modulation mode, $U_{peak}$ is the voltage peak value in the current period, and $\theta_2 = \pi - \theta_1$, $\theta_3 = \pi + \theta_1$, $\theta_4 = 2\pi - \theta_1$.

Correspondingly, an embodiment of the present invention further provides a grid-tied inverter, including: a power management apparatus, an inverting apparatus, and any one apparatus for reactive power compensation of power grid provided by the embodiment of the present invention.

The inverting apparatus performs active output under the control of the power management apparatus.

The apparatus for reactive power compensation of power grid performs power grid reactive power compensation under the control of the power management apparatus.

By using the grid-tied inverter provided by the embodiment of the present invention, the current PWM mode may be determined through the electric reference parameter corresponding to the detected voltage at the time of voltage dip of the power grid, so as to effectively combine the unipolar modulation mode and the bipolar modulation mode in one current period; then at the time of voltage dip of the power grid, effective reactive power compensation is performed on the power grid, and meanwhile the switching loss and the inductance loss are reduced.

The apparatus or system embodiments corresponding to the method embodiments are described briefly herein because the relevant contents can be derived from the method embodiments. The described apparatus or system embodiments are merely exemplary. The units described as separate parts may or may not be physically separate, and parts displayed as units may or may not be physical units, may be located in one position, or may be distributed on multiple network elements. A part of or all of the modules may be selected according to the actual needs to achieve the objectives of the solutions of the embodiments. A person of ordinary skill in the art may understand and implement the embodiment without creative efforts.

The current embodiments are merely exemplary examples, and should not be regarded as a limitation, and the detailed content should not limit the objective of the application. For example, the division of units or subunits is merely logic function division and can be other division in actual implementation. For example, multiple units or multiple subunits are combined together. In addition, multiple units or components may be combined or integrated in another system or some features may be ignored or not executed.

In addition, the schematic diagrams illustrating the system, apparatus, method and different embodiments may be combined or integrated with other systems, modules, technologies or methods. In addition, the displayed or discussed mutual couplings or direct couplings or communication connections may be implemented through some interfaces. The indirect couplings or communication connections between the apparatuses or units may be implemented in electronic, mechanical or other forms.

The foregoing descriptions are merely specific embodiments of the present invention. It should be noted by a person skilled in the art that modifications and variations may be made.

**Claims**

1. A method for reactive power compensation of power grid, comprising:

   detecting voltage of a power grid;
   when a voltage magnitude of the detected voltage is lower than a preset normal voltage magnitude, determining an electric reference parameter corresponding to the voltage;
   determining a current pulse width modulation (PWM) mode according to the electric reference parameter corresponding to the voltage, wherein the PWM mode comprises: a unipolar modulation mode and a bipolar modulation mode; and
   outputting reactive power by using the current PWM mode, so as to implement reactive power compensation for the power grid;
   **characterized in that**
   the electric reference parameter corresponding to the voltage comprises: a voltage phase angle $\theta$ corresponding to the voltage; wherein the determining a current pulse width modulation (PWM) mode according to the electric reference parameter specifically comprises:

   determining the unipolar modulation mode as the current PWM mode when the voltage phase angle $\theta$ corresponding to the voltage satisfies $\theta_1 \leq \theta \leq \theta_2$, or $\theta_3 \leq \theta \leq \theta_4$, in one current period; otherwise, determining the bipolar modulation mode as the current PWM mode,

   wherein $\theta_1 = \arcsin(\dfrac{U_{\min}}{U_{peak}})$ , $U_{\min}$ is the minimum voltage magnitude required for implementing soft switching by using the unipolar modulation mode, $U_{peak}$ is the voltage peak value in the current period, and $\theta_2 = \pi - \theta_1$, $\theta_3 = \pi + \theta_1$, $\theta_4 = 2\pi - \theta_1$.

2. An apparatus for reactive power compensation of power grid, comprising:

   a voltage detecting module (110), configured to detect voltage of a power grid, and send the detected voltage to a magnitude determining module (120);
   the magnitude determining module (120), configured to determine whether a voltage magnitude of the detected voltage is lower than a preset normal voltage magnitude, and if yes, trigger an electric reference parameter determining module (130);
   the electric reference parameter determining module (130), configured to determine an electric reference parameter corresponding to the voltage, and send the electric reference parameter corresponding to the voltage to a PWM mode determining module (140);
   the PWM mode determining module (140), configured to determine a current pulse width modulation (PWM) mode according to the electric reference parameter corresponding to the voltage, and send the current PWM mode to a reactive power compensation module (150), wherein the PWM mode comprises: a unipolar modulation mode and a bipolar modulation mode; and
   the reactive power compensation module (150), configured to output reactive power by using the current PWM mode, so as to implement reactive power compensation for the power grid;
   **characterized in that**
   the electric reference parameter determining module (130) is configured to determine a voltage phase angle $\theta$ corresponding to the voltage, and send the voltage phase angle $\theta$ corresponding to the voltage to the PWM mode determining module (140); and
   the PWM mode determining module (140) is configured to determine the unipolar modulation mode as the current PWM mode when the voltage phase angle $\theta$ corresponding to the voltage satisfies $\theta_1 \leq \theta \leq \theta_2$, or $\theta_3 \leq \theta \leq \theta_4$, in one current period; and determine the bipolar modulation mode as the current PWM mode when the voltage phase angle $\theta$ corresponding to the voltage satisfies neither $\theta_1 \leq \theta \leq \theta_2$, nor $\theta_3 \leq \theta \leq \theta_4$, in one current period,

   wherein $\theta_1 = \arcsin(\dfrac{U_{\min}}{U_{peak}})$ , $U_{\min}$ is the minimum voltage magnitude required for implementing soft switching by using the unipolar modulation mode, $U_{peak}$ is the voltage peak value in the current period, and $\theta_2 = \pi - \theta_1$, $\theta_3 = \pi + \theta_4$, $\theta_4 = 2\pi - \theta_1$.

**3.** A grid-tied inverter, comprising: a power management apparatus and an inverting apparatus, and further comprising: the apparatus for reactive power compensation of power grid according to claim 2, wherein the inverting apparatus performs active output under the control of the power management apparatus; the apparatus for reactive power compensation of power grid performs power grid reactive power compensation under the control of the power management apparatus.

**Patentansprüche**

**1.** Verfahren zur Blindleistungskompensation eines Stromnetzes, das Folgendes umfasst:

Detektieren einer Spannung eines Stromnetzes;
wenn eine Spannungsstärke der detektierten Spannung kleiner als eine voreingestellte Normalspannungsstärke ist, Bestimmen eines elektrischen Referenzparameters, der der Spannung entspricht;
Bestimmen eines aktuellen Pulsweitenmodulations-Modus, oder PWM-Modus, gemäß dem elektrischen Referenzparameter, der der Spannung entspricht, wobei der PWM-Modus Folgendes umfasst: einen unipolaren Modulationsmodus und einen bipolaren Modulationsmodus; und
Ausgeben von Blindleistung unter Verwendung des aktuellen PWM-Modus, um so Blindleistungskompensation für das Stromnetz zu implementieren;
**dadurch gekennzeichnet, dass**
der elektrische Referenzparameter, der der Spannung entspricht, Folgendes umfasst: einen Spannungs-Phasenwinkel $\theta$, der der Spannung entspricht, wobei das Bestimmen eines aktuellen Pulsweitenmodulations-Modus, oder PWM-Modus, gemäß dem elektrischen Referenzparameter insbesondere umfasst:

Bestimmen des unipolaren Modulationsmodus als den aktuellen PWM-Modus, wenn der Spannungs-Phasenwinkel $\theta$, der der Spannung entspricht, $\theta_1 \le \theta \le \theta_2$ oder $\theta_1 \le \theta \le \theta_4$, in einer aktuellen Periode erfüllt, andernfalls Bestimmen des bipolaren Modulationsmodus als den aktuellen PWM-Modus,
wobei $\theta_1 = \arcsin(U_{min}/U_{peak})$, $U_{min}$ die minimale Spannungsstärke, die zum Implementieren des Weichschaltens unter Verwendung des unipolaren Modulationsmodus erforderlich ist, $U_{peak}$ der Spitzenspannungswert in der aktuellen Periode und $\theta_2$

$= \pi - \theta_1$, $\theta_3 = \pi + \theta_1$, $\theta_4 = 2\pi - \theta_1$ ist.

**2.** Vorrichtung zur Blindleistungskompensation eines Stromnetzes, die Folgendes umfasst:

ein Spannungsdetektionsmodul (110), das ausgelegt ist zum Detektieren einer Spannung eines Stromnetzes und zum Senden der detektierten Spannung an ein Stärkebestimmungsmodul (120);
das Stärkebestimmungsmodul (120), ausgelegt zum Bestimmen, ob eine Spannungsstärke der detektierten Spannung kleiner als eine voreingestellte Normalspannungsstärke ist, und wenn ja, zum Auslösen eines elektrischen Referenzparameterbestimmungsmoduls (130);
das elektrische Referenzparameterbestimmungsmodul (130), ausgelegt zum Bestimmen eines elektrischen Referenzparameters, der der Spannung entspricht, und zum Senden des elektrischen Referenzparameters, der der Spannung entspricht, an ein PWM-Modus-Bestimmungsmodul (140);
das PWM-Modus-Bestimmungsmodul (140), ausgelegt zum Bestimmen eines aktuellen Pulsweitenmodulationsmodus, oder PWM-Modus, gemäß dem elektrischen Referenzparameter, der der Spannung entspricht, und zum Senden des aktuellen PWM-Modus an ein Blindleistungskompensationsmodul (150), wobei der PWM-Modus Folgendes umfasst: einen unipolaren Modulationsmodus und einen bipolaren Modulationsmodus; und
das Blindleistungskompensationsmodul (150), ausgelegt zum Ausgeben von Blindleistung unter Verwendung des aktuellen PWM-Modus, um so Blindleistungskompensation für das Stromnetz zu implementieren;
**dadurch gekennzeichnet, dass**
das elektrische Referenzparameterbestimmungsmodul (130) ausgelegt ist zum Bestimmen eines Spannungs-Phasenwinkels $\theta$, der der Spannung entspricht, und zum Senden des Spannungs-Phasenwinkels $\theta$, der der Spannung entspricht, an das PWM-Modus-Bestimmungsmodul (140); und
wobei das PWM-Modus-Bestimmungsmodul (140) ausgelegt ist zum Bestimmen des unipolaren Modulationsmodus als den aktuellen PWM-Modus, wenn der Spannungs-Phasenwinkel $\theta$, der der Spannung entspricht, $\theta_1 \le \theta \le \theta_2$, oder $\theta_3 \le \theta \le \theta_4$, in einer aktuellen Periode erfüllt, und zum Bestimmen des bipolaren Modulationsmodus als den aktuellen PWM-Modus, wenn der Spannungs-Phasenwinkel $\theta$, der der Spannung entspricht, weder $\theta_1 \le \theta \le \theta_2$, noch $\theta_3 \le \theta \le \theta_4$, in einer aktuellen Periode erfüllt,
wobei $\theta_1 = \arcsin(U_{min}/U_{peak})$, $U_{min}$ die minimale

Spannungsstärke, die zum Implementieren des Weichschaltens unter Verwendung des unipolaren Modulationsmodus erforderlich ist, $U_{peak}$ der Spitzenspannungswert in der aktuellen Periode und $\theta_2 = \pi - \theta_1$, $\theta_3 = \pi + \theta_1$, $\theta_4 = 2\pi - \theta_1$ ist.

3. Netzangebundener Wechselrichter, der Folgendes umfasst: eine Strommanagementvorrichtung und eine Wechselrichtervorrichtung und ferner umfassend: die Vorrichtung zur Blindleistungskompensation eines Stromnetzes nach Anspruch 2, wobei die Wechselrichtervorrichtung unter der Steuerung der Strommanagementvorrichtung eine aktive Ausgabe durchführt; die Vorrichtung zur Blindleistungskompensation eines Stromnetzes unter der Steuerung der Strommanagementvorrichtung Stromnetz- Blindleistungskompensation durchführt.

**Revendications**

1. Procédé de compensation de puissance réactive du réseau électrique, comprenant les étapes suivantes :

   détecter une tension d'un réseau électrique ;
   lorsqu'une amplitude de tension de la tension détectée est inférieure à une amplitude de tension normale prédéfinie, déterminer un paramètre de référence électrique correspondant à la tension ;
   déterminer un mode de modulation de largeur d'impulsion (PWM) courant en fonction du paramètre de référence électrique correspondant à la tension, où le mode PWM comprend : un mode de modulation unipolaire et un mode de modulation bipolaire ; et
   délivrer en sortie une puissance réactive en utilisant le mode PWM courant, de manière à mettre en oeuvre une compensation de puissance réactive pour le réseau électrique ;
   **caractérisé en ce que**
   le paramètre de référence électrique correspondant à la tension comprend : un angle de phase de tension θ correspondant à la tension ; où déterminer un mode de modulation de largeur d'impulsion (PWM) courant en fonction du paramètre de référence électrique comprend spécifiquement les étapes suivantes :

      déterminer le mode de modulation unipolaire comme étant le mode PWM courant lorsque l'angle de phase de tension θ correspondant à la tension satisfait les équations $\theta_1 \leq \theta \leq \theta_2$ ou $\leq_3 \leq \theta \leq \theta_4$ dans une période courante ; sinon, déterminer le mode de modulation bipolaire comme étant le mode

PWM courant, où $\theta_1 = arsin\left(\frac{U_{min}}{U_{peak}}\right)$, $U_{min}$ est l'amplitude de tension minimale requise pour mettre en oeuvre une commutation douce en utilisant le mode de modulation unipolaire, $U_{peak}$ est la valeur de tension de crête dans la période courante, et $\theta_2 = \pi-\theta_1$, $\theta_3 = \pi+\theta_1$, $\theta_4 = 2\pi-\theta_1$.

2. Appareil de compensation de puissance réactive du réseau électrique, comprenant :

   un module de détection de tension (110), configuré pour détecter une tension d'un réseau électrique, et pour envoyer la tension détectée à un module de détermination d'amplitude (120) ;
   le module de détermination d'amplitude (120), configuré pour déterminer si une amplitude de tension de la tension détectée est inférieure à une amplitude de tension normale prédéfinie et, si tel est le cas, déclencher un module de détermination de paramètre de référence électrique (130) ;
   le module de détermination de paramètre de référence électrique (130), configuré pour déterminer un paramètre de référence électrique correspondant à la tension, et envoyer le paramètre de référence électrique correspondant à la tension à un module de détermination de mode PWM (140) ;
   le module de détermination de mode PWM (140), configuré pour déterminer un mode de modulation de largeur d'impulsion (PWM) courant en fonction du paramètre de référence électrique correspondant à la tension, et envoyer le mode PWM courant à un module de compensation de puissance réactive (150), où le mode PWM comprend : un mode de modulation unipolaire et un mode de modulation bipolaire ; et
   le module de compensation de puissance réactive (150), configuré pour délivrer en sortie une puissance réactive en utilisant le mode PWM courant, de manière à mettre en oeuvre une compensation de puissance réactive pour le réseau électrique ;
   **caractérisé en ce que**
   le module de détermination de paramètre de référence électrique (130) est configuré pour déterminer un angle de phase de tension θ correspondant à la tension, et envoyer l'angle de phase de tension θ correspondant à la tension au module de détermination de mode PWM (140) ; et
   le module de détermination de mode PWM (140) est configuré pour déterminer le mode de modulation unipolaire comme étant le mode PWM courant lorsque l'angle de phase de tension $\theta$ correspondant à la tension satisfait les équations $\theta_1 \leq \theta \leq \theta_2$ ou $\theta_3 \leq \theta \leq \theta_4$ dans une période courante ; et déterminer le mode de modulation bipolaire comme étant le mode PWM courant lorsque l'angle de phase de tension $\theta$ correspondant à la tension ne satisfait aucune des équations $\theta_1 \leq \theta \leq \theta_2$ et $\theta_3 \leq \theta \leq \theta_4$ dans une période courante, où $\theta_1 = arsin\left(\frac{U_{min}}{U_{peak}}\right)$, $U_{min}$ est l'amplitude de tension minimale requise pour mettre en oeuvre une commutation douce en utilisant le mode de modulation unipolaire, $U_{peak}$ est la valeur de tension de crête dans la période courante, et $\theta_2 = \pi\text{-}\theta_1$, $\theta_3 = \pi\text{+}\theta_1$, $\theta_4 = 2\pi\text{-}\theta_1$.

3. Inverseur raccordé au réseau, comprenant : un appareil de gestion de puissance et un appareil d'inversion, et comprenant en outre l'appareil de compensation de puissance réactive du réseau électrique selon la revendication 2,
dans lequel l'appareil d'inversion délivre une sortie active sous le contrôle de l'appareil de gestion de puissance ; l'appareil de compensation de puissance réactive du réseau électrique procède à une compensation de puissance réactive du réseau électrique sous le contrôle de l'appareil de gestion de puissance.

A grid-tied inverter detects voltage of a power grid    S101

Whether a voltage magnitude of the detected voltage is lower than a normal voltage magnitude    S102

No

Yes

Determine the electric reference parameter corresponding to the voltage    S103

Determine a current pulse width modulation (PWM) mode according to the electric reference parameter corresponding to the voltage    S104

Perform no processing

Output reactive power by using the current PWM mode, so as to implement reactive power compensation for the power grid    S105

FIG. 1

A grid-tied inverter detects voltage of a power grid — S201

S202

Whether a voltage magnitude of the detected voltage is lower than a normal voltage magnitude

No

Yes

Determine a voltage magnitude corresponding to the voltage — S203

S204

Whether the voltage magnitude corresponding to the current voltage is not less than a preset voltage magnitude threshold

No

Yes

Output reactive power by using the unipolar modulation mode — S205

Perform no processing

Output reactive power by using the bipolar modulation mode — S206

FIG. 2

A grid-tied inverter detects voltage of a power grid — S301

S302

Whether a voltage magnitude of the
detected voltage is lower than a normal
voltage magnitude

No

Yes

Determine a voltage phase angle $\theta$ corresponding to the voltage — S303

S304

Whether $\theta$ satisfies $\theta_1 \leq \theta \leq \theta_2$ or
$\theta_3 \leq \theta \leq \theta_4$

No

Yes

Output reactive power by using the unipolar modulation mode — S305

Perform no
processing

Output reactive power by using the bipolar modulation mode — S306

FIG. 3

FIG. 4

FIG. 5

```
┌─────────────────────┐
│  Voltage detecting  │  ⌐ 110
│       module        │
└─────────────────────┘
           │
┌─────────────────────┐
│     Magnitude       │  ⌐ 120
│ determining module  │
└─────────────────────┘
           │
┌─────────────────────┐
│ Electric reference  │
│     parameter       │  ⌐ 130
│ determining module  │
└─────────────────────┘
           │
┌─────────────────────┐
│     PWM mode        │  ⌐ 140
│ determining module  │
└─────────────────────┘
           │
┌─────────────────────┐
│   Reactive power    │
│    compensation     │  ⌐ 150
│       module        │
└─────────────────────┘
```

FIG. 6

**EP 2 731 222 B1**

**REFERENCES CITED IN THE DESCRIPTION**

**Patent documents cited in the description**

- WO 2013004585 A1

- EP 2595305 A1